(19) Europäisches Patentamt
European Patent Office
Office européen des brevets

(11) EP 1 035 907 B1

# (12) FASCICULE DE BREVET EUROPEEN

(45) Date de publication et mention de la délivrance du brevet:
**09.03.2005 Bulletin 2005/10**

(21) Numéro de dépôt: **98958312.5**

(22) Date de dépôt: **02.12.1998**

(51) Int Cl.[7]: **B01D 71/02**, B01D 67/00, C04B 41/84

(86) Numéro de dépôt international:
**PCT/FR1998/002603**

(87) Numéro de publication internationale:
**WO 1999/029402 (17.06.1999 Gazette 1999/24)**

(54) **MATIERE INORGANIQUE DE FILTRATION MODIFIEE PAR GREFFAGE D'ORGANOMINERAUX ET SON PROCEDE DE PREPARATION**

DURCH PFROPFUNG VON ORGANOMINERALEN MODIFIZIERTES ANORGANISCHES MATERIAL ZUM FILTERN UND VERFAHREN ZU DESSEN HERSTELLUNG

INORGANIC FILTERING MATERIAL MODIFIED WITH ORGANOMINERAL GRAFTING AND PREPARATION METHOD

(84) Etats contractants désignés:
**AT BE CH DE DK ES FI FR GB GR IE IT LI NL PT SE**

(30) Priorité: **04.12.1997 FR 9715327**

(43) Date de publication de la demande:
**20.09.2000 Bulletin 2000/38**

(73) Titulaire: **Orelis**
**92408 Courbevoie Cedex (FR)**

(72) Inventeurs:
- **CHAUFER, Bernard**
  **F-35830 Betton (FR)**
- **LIOU, Jun, Kong**
  **F-01700 Beynost (FR)**
- **BOUGUEN, Anne**
  **F-22950 Trégueux (FR)**
- **RABILLER-BAUDRY, Murielle**
  **F-35510 Cesson-Sévigné (FR)**
- **MILLESIME, Luc**
  **F-94130 Nogent sur Marne (FR)**

(74) Mandataire: **Le Coupanec, Pascale et al**
**Cabinet Lavoix,**
**2 Place d'Estienne d'Orves**
**75441 Paris Cedex 09 (FR)**

(56) Documents cités:
**EP-A- 0 503 087**
**EP-A- 0 849 332**
**FR-A- 2 230 405**
**FR-A- 2 418 204**

- **SMAIHI M ET AL: "ORGANIC-INORGANIC GAS SEPARATION MEMBRANES: PREPARATION AND CHARACTERIZATION" JOURNAL OF MEMBRANE SCIENCE, vol. 116, no. 2, 7 août 1996, pages 211-220, XP000730132**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 035 907 B1

Printed by Jouve, 75001 PARIS (FR)

## Description

La présente invention a pour objet des membranes de filtration modifiées par greffage d'organominéraux et/ou de minéraux et un procédé utile pour préparer lesdites membranes, ainsi que leur utilisation pour la préparation de membranes à greffons minéraux.

Depuis de nombreuses années, les membranes sont connues pour leurs propriétés séparatrices. Elles sont à ce jour largement exploitées sur le plan industriel en remplacement des techniques séparatrices classiques, et ceci dans de nombreux secteurs d'activité tels que l'agro-alimentaire, la biotechnologie, le traitement de l'eau et des effluents des industries chimiques, électroniques ou nucléaires.

Ce transfert technologique vers les techniques séparatrices à membrane, surtout dans les domaines de l'ultrafiltration et de la microfiltration, est une conséquence directe de la compréhension des mécanismes mis en jeu et surtout de l'évolution des membranes synthétiques, avec en particulier l'apparition d'une nouvelle génération de membranes : les membranes inorganiques et notamment celles constituées de matériaux céramiques.

Ces membranes inorganiques offrent des avantages spécifiques par rapport à leurs homologues organiques : leur tenue mécanique ainsi que leur inertie chimique, biologique et thermique garantissent leur durée de vie, et surtout, permettent de les employer dans des conditions extrêmement sévères.

A titre illustratif de ces membranes inorganiques, on peut notamment mentionner les membranes microporeuses en métal tel que l'argent ou le nickel, en verre, et tout particulièrement les membranes en carbone, ou en oxyde comme l'alumine et la zircone.

La technique la plus utilisée pour préparer ces membranes céramiques consiste à déposer une ou plusieurs couches sélectives, d'épaisseur de quelques microns, constituant la couche filtrante sur une matrice support macroporeux assurant la résistance mécanique. Il a ainsi été développé des membranes en $\gamma$ alumine et $\alpha$ alumine déposées sur des supports en $\alpha$ alumine, des membranes tubulaires en zircone sur support en carbone (Carbosep® de la société Orelis) et plus récemment des membranes en zircone sur un support monolithe en oxydes métalliques (Kerasep® de la société Orelis ; EP 585 152). La couche filtrante est habituellement obtenue par dépôt d'oxydes minéraux sur la matrice, suivie d'un traitement thermique final.

De manière générale, les membranes de filtration sont caractérisées par les paramètres suivants : leur perméabilité à l'eau et à l'air, la distribution de la taille de leurs pores et leur rétention.

En ce qui concerne plus particulièrement ce dernier paramètre, il est classiquement mesuré à partir du taux de rétention du soluté considéré qui est défini par l'équation suivante :

$$R = 1 - \frac{Cp}{Co}$$

avec Cp étant la concentration en soluté dans le perméat et Co, la concentration en soluté dans la solution initiale. C'est ainsi que le seuil de coupure de la membrane correspond à la masse moléculaire du plus petit soluté retenu à 90 % par la membrane.

Les travaux réalisés dans le cadre de la présente invention avaient précisément pour objet l'optimisation de la sélectivité des membranes inorganiques de filtration.

De manière inattendue, il a été mis en évidence qu'une modification de la surface de la couche filtrante de ces membranes inorganiques par greffage d'agents organominéraux augmentait significativement leur sélectivité vis-à-vis de solutés différents.

La présente invention a donc pour premier objet une membrane inorganique de filtration caractérisée en ce qu'elle comprend un support en matériau inorganique revêtu d'au moins une couche séparatrice membranaire constituée de particules d'hydroxyde(s) et/ou oxyde(s) métallique(s) et à la surface de laquelle sont greffés covalentement des motifs organominéraux.

Avantageusement, le greffage de ces motifs organominéraux à la surface de la couche membranaire séparatrice permet d'améliorer significativement sa sélectivité à l'égard des solutés

Ce greffage repose sur l'établissement de liaisons covalentes entre les fonctions minérales des hydroxydes et/ou oxydes métalliques de la couche séparatrice membranaire et celles des motifs organominéraux.

Au sens de l'invention on entend couvrir sous la dénomination membrane inorganique de filtration des membranes inorganiques susceptibles d'être mises en oeuvre pour la microfiltration, l'ultrafiltration ou la nanofiltration.

La microfiltration et l'ultrafiltration font partie de la famille des techniques séparatrices à membranes dont la force motrice du transfert est un gradient de pression. Le principe de fonctionnement consiste donc à faire circuler sous pression le liquide à traiter le long d'une membrane perméable au solvant mais imperméable aux solutés que l'on souhaite retenir.

La distinction microfiltrationlultrafiltration est uniquement liée à la taille des éléments à séparer. On admet généralement que la microfiltration concerne les particules en suspension dont la taille est supérieure à 0,2 $\mu$m, alors

que l'ultrafiltration sépare dans la gamme des macromolécules de masses moléculaires supérieures à quelques milliers jusqu'aux particules colloïdales de diamètre 0,2 µm.

Généralement, la microfiltration est classiquement utilisée à des fins de clarification et de stérilisation et l'ultrafiltration concerne préférentiellement la séparation de solutés macromoléculaires.

Quant à la nanofiltration, elle concerne plus particulièrement la rétention des solutés à masse moléculaire supérieure à 1000 g/mol.

Les motifs organominéraux greffés à la surface de la couche séparatrice membranaire, dérivent en général de complexes organométalliques hydrolysables comprenant au moins un atome de titane et/ou de zirconium.

Selon un mode préféré de l'invention, ces complexes organométalliques sont choisis parmi les organotitanates, organozirconates et organozicoaluminates.

Comme organotitanates convenant à l'invention on peut tout particulièrement citer ceux du type alkoxy, néoalkoxy et chélate.

En ce qui concerne les zirconates, il s'agit notamment ceux du type néoalkoxy, chélate ou encore organozircoaluminate.

Plus préférentiellement, il s'agit :

- d'organotitanates ou organozirconates répondant à l'une des formules générales I ou II suivantes :

$$(RO)_p-M\left[Z_1R_1\right]_n\left[Z_2R_2\right]_m \qquad I$$

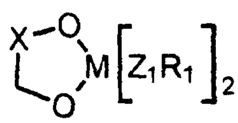 II

dans lesquelles :

- M représente un atome de titane ou de zirconium,
- R représente un groupement

$$-(CH_3)_2CH-$$

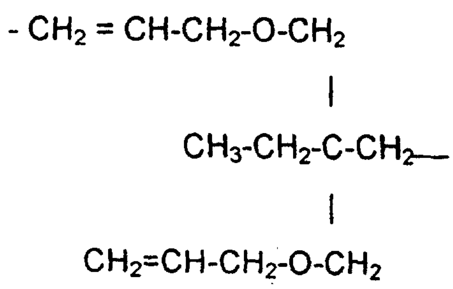

ou

$$-CH_3(OC_2H_4)_2—$$

- $R_1$ et $R_2$, identiques ou différents, représentent un radical organique non hydrolysable,
- X représente un groupement méthylène ou CO,

- m et n sont égaux à 0, 1, 2 ou 3 et p égal à 1 ou 2 à la condition que la somme de n, p et m soit égale à 4 et avec

  - lorsque p est égal à 1,
    $Z_1$ et $Z_2$, identiques ou différents, représentant
    $-O-$, $-OC(O)-$, $-OC(O)O-$, $-OP(O)(O-)_2$, $-OP(O)(OH)P(O)(O-)_2$ $OP(O)(OH)P(O)(O-)_3$, $OP(O)(O-)_3$, $OS(O)_2-$ ou $OS(O)_2(-)_3$ et

  - lorsque p est égal à 2,
    $Z_1$ et $Z_2$ formant ensemble une chaîne divalente à structure cyclique tel qu'un cyclopyrophosphite ;

- ou d'un organozircoaluminate répondant à la formule générale III suivante:

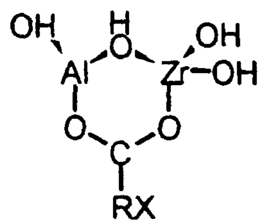

III

avec R représentant une chaîne hydrocarbonée $(CH_2)_2$, $(CH_2)_4$ ou $(CH_2)_{12}$ et X représentant un groupement $NH_2$, SH, OH, COOH ou

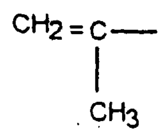

En ce qui concerne les substituants $R_1$ et $R_2$ des formules générales I et II, ils sont de préférence choisis parmi les groupements alkyle, cycloalkyle, alkoxyalkyle, phényle, phénylalkyle éventuellement substitués par des groupements alkoxy, alkylthio, alkoxycarbonyle ou alkylcarbonyle par exemple.

De manière préférée, on met en oeuvre les organotitanates ou organozirconates suivants :

- l'isopropyle tri-(N-éthyl aminoéthylamino) titanate,
- le néoalkoxy tri-(N-éthylaminoéthylamino) titanate,
- le néoalkoxy tri-(néodécanoyl) titanate,
- l'isopropyle tri-(isostéaroyl) titanate,
- l'isopropyle tri-(dioctylphosphato) titanate,
- le tri-néoalkoxy (dioctylphosphato)titanate,
- le tri-néoalkoxy (néodécanoyl) zirconate,
- le tri-néoalkoxy (dodécanoyl) benzène sulfonyle zirconate,
- le tri-néoalkoxy (éthylènediaminoéthyl) zirconate et
- le tri-néoalkoxy (m-aminophényl) zirconate.

L'ensemble de ces organominéraux réagissent via leur(s) groupe(s) hydrolysable(s), à savoir leur(s) fonction(s) alkoxy ou carboxy par exemple, avec les fonctions minérales de la couche séparatrice membranaire et établissent ainsi des liaisons covalentes à la surface de ladite couche.

La présente invention a également pour objet une membrane inorganique de filtration comprenant un support en matériau inorganique revêtu d'au moins une couche séparatrice membranaire constituée de particules d'hydroxyde(s) et/ou oxyde(s) métallique(s), caractérisée en ce qu'elle comprend à la surface de ladite couche séparatrice membranaire, une couche moléculaire comprenant des motifs organominéraux greffés à la surface de ladite couche séparatrice, lesdits motifs organominéraux répondant à la formule générale IV suivante :

$$(-)_p\ M[Z_1R_1]_n[Z_2R_2]_m \qquad IV$$

dans laquelle :

- M représente un atome de titane ou de zirconium,
- $R_1$ et $R_2$, identiques ou différents, représentent un radical organique non hydrolysable,
- m et n sont égaux à 0, 1, 2 ou 3 et p égal à 1 ou 2 à la condition que la somme de n, p et m soit égale à 4 et avec
  - lorsque p est égal à 1,
    $Z_1$ et $Z_2$, identiques ou différents, représentant
    - -O-, -OC(O)-, -OC(O)O-, $-OP(O)(O-)_2$, $-OP(O)(OH)P(O)(O-)_2$ $OP(O)(OH)P(O)(O-)_3$, $OP(O)(O-)_3$, $OS(O)_2$- ou $OS(O)_2(-)_3$ et
  - lorsque p est égal à 2,
    $Z_1$ et $Z_2$ formant ensemble une chaîne divalente à structure cyclique tel qu'un cyclopyrophosphite.

En ce qui concerne $R_1$ et $R_2$ ils peuvent notamment représenter des groupements tels que définis précédemment.

Les motifs organominéraux greffés sont de préférence choisis parmi les dérivés tri-(N-éthylaminoéthylamino) titanate, tri-(néodécanoyl)titanate, tri-(isostéaroyl) titanate, tri-(dioctylphosphato) titanate.

En ce qui concerne les motifs minéraux greffés à la surface des membranes, ils peuvent être obtenus par traitement des motifs organominéraux greffés identifiés ci-dessus et plus précisément par élimination des fonctions organiques de ces motifs organominéraux.

En l'occurrence, il peut s'agir d'une hydrolyse acide ou encore alcaline en milieu oxydant. Ainsi, dans le cas particulier des organotitanates greffés leur traitement en milieu fortement alcalin et en présence d'un agent oxydant, de type peroxyde ou hypochlorite par exemple, permet d'éliminer l'ensemble des fonctions organiques présentes sur les greffons. Seules sont conservées à la surface de la couche séparatrice membranaire, les fonctions minérales des motifs organominéraux initiaux.

Les motifs minéraux sont de préférence $Ti(OH)_3$, $Ti(OH)_2$, $Zr(OH)_3$ et/ou $Zr(OH)_2$.

Selon un mode préféré de l'invention, les greffons présents à la surface de la couche séparatrice membranaire sont de même nature. Toutefois, une couche séparatrice membranaire peut être greffée de greffons se différenciant de par leur nature chimique à savoir organominérale ou minérale.

De même, il est possible d'avoir parmi des motifs organominéraux greffés à la surface de ladite couche séparatrice, des motifs organominéraux différents et réciproquement pour les motifs minéraux.

En l'occurrence, il peut être effectué consécutivement les opérations de greffages correspondantes selon le procédé décrit ci-après sans hydrolyse intermédiaire.

Avantageusement, les membranes greffées obtenues selon l'invention présentent un taux de rétention en solutés neutres significativement augmenté par rapport à une membrane inorganique de même composition mais non greffée.

La capacité maximale de greffage à la surface dé la membrane est bien entendu fonction de la nature du motif à greffer et de son encombrement.

Plus particulièrement, le taux de greffage à la surface de ladite couche séparatrice membranaire varie entre environ 10 et 80%.

En ce qui concerne le support de la membrane selon l'invention, il s'agit d'un support inorganique pouvant être composé d'un métal, de verre, de carbone, de carbure de silicium, de carbures métalliques ou d'oxydes métalliques.

Le support est habituellement macroporeux.

De manière préférée, il s'agit soit de carbone soit d'un support monolithe céramique.

En ce qui concerne les supports monolithes susceptibles d'être employés selon l'invention, on se reportera notamment à l'enseignement de la demande EP 585 152 (en particulier, colonne 3, ligne 24 à colonne 4, ligne 11 ).

De préférence, un tel support présente un diamètre moyen équivalent de pores Ds compris entre 1 et 20 µm, plus préférentiellement de 5 à 15 µm et une porosité (mesurée avec un porosimètre à mercure) supérieure à 30 %, notamment supérieure à 40 %. Plus préférentiellement, il s'agit d'une céramique de grains d'alumine $Al_2O_3$ enrobés

au moins en partie par des grains d'oxyde de titane $TiO_2$. Le pourcentage pondéral d'oxyde de titane $TiO_2$ par rapport au poids total d'$Al_2O_3$ et de $TiO_2$ est compris entre 1 % et 75 % et de préférence entre 20 % et 50 %.

Les grains d'alumine présentent généralement une granulométrie comprise entre 3 et 500 μm, de préférence entre 10 et 100 μm, de façon encore plus préférée entre 20 et 30 μm.

Les grains de $TiO_2$ présentent une granulométrie comprise entre 0,01 et 7 μm, de préférence entre 0,1 et 1 μm.

Selon une mode de réalisation préféré de l'invention, l'alumine est une alumine de type corindon dont les grains ont une forme tabulaire et le pourcentage pondéral d'oxyde de titane $TiO_2$ par rapport au poids total d'alumine et de $TiO_2$ est compris entre 20 et 40 %.

De préférence l'alumine est essentiellement de type corindon et l'oxyde de titane est essentiellement de type rutile.

Les supports monolithes céramiques susceptibles d'être utilisés selon l'invention sont en général multicanaux. Leur nombre de canaux peut alors être compris entre 3 et 52, en particulier égal à 7 ou 19. Le diamètre desdits canaux peut notamment se situer entre 1,5 et 7 mm, par exemple entre 2,5 et 4,5 mm.

Ces supports peuvent présenter un diamètre compris entre 15 et 30 mm.

Quant à la couche membranaire séparatrice à modifier par greffage, elle est formée d'hydroxyde(s) et/ou, de préférence, d'oxyde(s) métallique(s), simple ou mixte.

Cette couche membranaire séparatrice à modifier par greffage peut être une couche membranaire séparatrice de microfiltration ou, de préférence, d'ultrafiltration ou, de manière plus préférée, de nanofiltration.

Lorsque la couche à modifier par greffage est une couche membranaire séparatrice de microfiltration (c'est-à-dire dans le cas d'une membrane inorganique de microfiltration), celle-ci est située à la surface du support et de préférence constituée de particules d'hydroxyde(s) et/ou d'oxyde(s) métallique(s) frittées dont le diamètre moyen équivalent de pores Do avant frittage est compris entre 0,1 et 3,0 μm suivant un rapport Ds/Do tel que $0,3 < Ds/Do < 200$, en particulier $1< Ds/Do < 150$, ladite couche présentant un diamètre moyen équivalent de pores Dm compris entre 0,05 et 1,5μm.

Cette couche membranaire séparatrice de microfiltration peut être formée d'un empilement de plusieurs couches de ce type.

Lorsque la couche à modifier par greffage est une couche membranaire d'ultrafiltration, (c'est-à-dire dans le cas d'une membrane inorganique d'ultrafiltration), celle-ci est de préférence située sur un couche membranaire de microfiltration, en particulier telle que définie précédemment, et, de préférence, constituée de particules d'hydroxyde(s) et/ou d'oxyde(s) métallique(s) frittées dont le diamètre équivalent de pores Du avant frittage est compris entre 2 et 100 nm suivant un rapport Dm/Du tel que $0,5 < Dm/Du <750$.

De même, cette couche membranaire séparatrice d'ultrafiltration peut être formée d'un empilement de plusieurs couches de ce type.

Lorsque la couche à modifier par greffage est une couche membranaire de nanofiltration, (c'est à dire. dans le cas d'une membrane inorganique de nanofiltration), celle-ci est de préférence située sur une couche membranaire d'ultrafiltration, en particulier telle que définie précédemment, et, de préférence, constituée de particules d'hydroxyde(s) et/ou d'oxyde(s) métallique(s) frittées dont le diamètre moyen équivalent de pores Dn avant frittage est compris entre 0,5 et 2 nm, notamment entre 0,5 et 1, 5 nm.

De même, cette couche membranaire séparatrice de nanofiltration peut être formée d'un empilement de plusieurs couches de ce type.

Les métaux des hydroxydes ou, de préférence, des oxydes métalliques formant les couches membranaires séparatrices précitées, notamment celles à modifier par greffage, peuvent être par exemple choisis parmi le berrylium, le magnésium, le calcium, l'aluminium, le titane, le strontium, l'yttrium, le lanthane, le zirconium, le hafnium, le thorium, le fer, le manganèse, le silicium et leurs divers mélanges possibles.

Les couches membranaires séparatrices précitées sont avantageusement formées d'oxyde(s) métallique(s). En général, elles sont en alumine, de préférence en oxyde de titane et/ou en zircone ; ces oxydes peuvent alors éventuellement comporter en ordre un métal de stabilisation structurale choisi parmi l'yttrium, le calcium, le magnésium, un métal des terres rares et leurs mélanges.

L'(les) oxydes(s) métallique(s) de la couche membranaire de microfiltration est (sont) en général de l'alumine, de la zircone ou, de préférence, de l'oxyde de titane.

La couche membranaire de microfiltration est habituellement déposée sur le support par le procédé connu dénommé engobage ("slip casting") selon lequel on dépose en général une barbotine de l'oxyde métallique sur le support puis on effectue un frittage approprié. La couche membranaire frittée a de préférence une épaisseur comprise entre 5 et 50 μm.

La température de frittage doit être compatible avec la température de frittage maximum du support. Ainsi, lorsque le support est en corindon et rutile, on utilise de préférence une couche membranaire à base d'oxyde de titane dont la température de frittage est inférieure à 1275 °C.

De manière très préférée, la couche membranaire de microfiltration ne doit pas pénétrer de façon sensible à

l'intérieur du support. L'interpénétration de cette couche membranaire est ainsi généralement inférieure à 2 µm, en particulier inférieure à 0,5 µm.

Pour cela, on peut, avant l'engobage, combler la porosité du support par un liant organique se décomposant au moment du frittage, comme par exemple une résine mélanine / formol : on peut également obturer les orifices des pores du support au moyen de poudres très fines de produits éliminantes par combustion dans l'air, comme par exemple le noir de carbone.

L'(les) oxyde(s) métallique(s) de la couche membranaire d'ultrafiltration peut (peuvent) être en particulier de l'oxyde de titane ou, de préférence, de la zircone.

Les particules d'oxydes métalliques frittées sont ici généralement obtenues :

soit avec un oxyde et un procédé pour déposer la couche analogues à ceux employées pour la couche membranaire de microfiltration (seule la granulométrie change),
soit par traitement thermique de particules d'oxydes hydratées obtenues par un procédé de type sol-gel et déposées par la méthode d'engobage.

La couche membranaire présente avantageusement un diamètre moyen équivalent de pores compris entre 2 et 100 nm, notamment entre 2 et 50 nm, ce qui la rend particulièrement adaptée à recevoir une couche membranaire de nanofiltration.

De manière très préférée, la couche membranaire d'ultrafiltration ne doit pas pénétrer de façon sensible à l'intérieur de la couche membranaire de microfiltration.

Lorsque la couche membranaire d'ultrafiltration est de la zircone ladite couche présente un seuil dé coupure entre 10 et 300 kD (1 kD = $10^3$ daltons), par exemple égal à 15 kD.

Il est à noter qu'un ensemble support monolithe + couche membranaire de microfiltration + couche membranaire d'ultrafiltration peut former une membrane d'ultrafiltration telle qu'illustrée dans la demande EP 585 152.

L'oxyde métallique de la couche membranaire de filtration est, de préférence, de la zircone.

La couche membranaire de nanofiltration est avantageusement obtenue par un procédé de type sol-gel, comprenant, de préférence, une hydrolyse en milieu alcoolique, par exemple dans le propanol.

La couche membranaire de nanofiltration peut ainsi être une couche de zircone obtenue par un procédé de type sol-gel comprenant :

- la formation d'un sol par hydrolyse en milieu alcoolique, par exemple dans le propanol, d'un précurseur d'alcoxyde de zirconium, de préférence en présence d'un ligand complexant qui permet de contrôler l'hydrolyse, conformément à ce qui est décrit dans la demande EP 627960 ; on peut, par exemple, former un tel sol en hydrolysant du propoxyde de zirconium ($Zr(OC_3H_7)_4$) dans le propanol en présence du ligand complexant acétylacétone ;
- le dépôt du sol sur la couche membranaire d'ultrafiltration ; ce dépôt est de préférence obtenu en mettant en contact par remplissage des canaux de la couche membranaire d'ultrafiltration (donc la membrane d'ultrafiltration) et le sol précédemment préparé, auquel on aura préalablement ajouté un liant organique, par exemple de l'alcool polyvinylique, afin d'ajuster la viscosité ;
- la transformation du sol en gel par séchage ;
- enfin, un traitement thermique, qui permet la transformation de la couche de gel en couche d'oxyde métallique (zircone).

De préférence, on choisit des conditions opératoires de préparation du sol (teneur en alcoxyde, teneur en ligand complexant) et/ou des conditions de séchage et de traitement thermique (température) de manière à obtenir une membrane dite microporeuse (diamètre moyen de pores en général de l'ordre de 1 nm) ; la température de séchage peut ainsi être comprise entre 40 et 100 °C ; la température de traitement thermique est en particulier comprise entre 350 et 600 °C.

A titre illustratif des membranes de filtration inorganiques susceptibles d'être modifiées par greffage selon l'invention on peut tout particulièrement citer les membranes Carbosep® classiquement proposées pour l'ultrafiltration et les membranes Kerasep® destinées plus particulièrement à un emploi en microfiltration et ultrafiltration, ou à une utilisation en nanofiltration lorsqu'elles comprennent une couche membranaire de nanofiltration, notamment en zircone de préférence obtenue par un procédé de type Sol.-gel.

La présente invention a pour autre objet un procédé utile pour la préparation de membranes inorganiques de filtration modifiées par greffage de motifs organominéraux telles que définies précédemment.

Plus précisément, ce procédé comprend :

- le conditionnement de la couche séparatrice membranaire de ladite membrane dans le solvant de la solution de greffage,

- ❑la circulation de la solution de greffage, comprenant au moins un organominéral à greffer, à travers la couche séparatrice membranaire conditionnée, dans des conditions opératoires appropriées à la réalisation dudit greffage,
- le rinçage de ladite couche séparatrice membranaire greffée, de manière à en éliminer l'excès en organominéraux n'ayant pas réagi et
- le séchage de ladite membrane greffée.

Le procédé comprend, le cas échéant, un traitement des motifs organominéraux greffés pour éliminer leurs fonctions organiques.

En ce qui concerne l'organominéral à greffer, il s'agit avantageusement d'un complexe organométallique hydrolysable comprenant au moins un atome de titane ou de zirconium. Plus préférentiellement , il s'agit d'un organotitanate ou d'un organozirconate tel que défini en formules I, II ou III et en particulier un de ceux identifiés précédemment.

En ce qui concerne le choix du solvant, il est dicté en général par la nature de l'organominéral que l'on souhaite greffer et notamment par la nature du groupement $R_2$ pour les organométalliques répondant à la formule générale I. De préférence, il s'agit d'un solvant aqueux ou alcoolisé. Plus préférentiellement, il s'agit d'isopropanol. Ce solvant est particulièrement avantageux pour la transformation de la couche séparatrice membranaire par des motifs dérivant des organominéraux portant un ou plusieurs groupement(s) hydrophile(s). Toutefois les solvants aromatiques de type xylène et toluène, s'avèrent également appropriés pour le greffage d'organominéraux possédant un caractère hydrophobe, notamment de par la nature hydrophobe, de leur groupement $R_2$ pour les composés définis en formule générale I.

En ce qui concerne le conditionnement de la couche séparatrice membranaire à transformer, il est de préférence réalisé en circuit fermé.

Plus préférentiellement, cette opération est effectuée sous une pression d'environ 1 bar.

Le greffage est réalisée par circulation d'une solution de l'organominéral à greffer (solution de greffage) à travers la membrane inorganique de filtration à modifier.

En ce qui concerne le solvant de greffage mis en oeuvre, il s'agit du solvant retenu pour l'étape précédente, relative au conditionnement de la couche séparatrice membranaire.

La solution de greffage possède généralement une concentration comprise entre environ 5 et 100 g/l en au moins un organominéral et de préférence entre environ 20 et 70 g/l.

La circulation de la solution de greffage à travers la membrane est de préférence réalisée en circuit fermé avec recyclage du perméat et du rétentat.

En ce qui concerne la température lors de l'opération de greffage, elle peut être de l'ordre de la température ambiante, c'est-à-dire de 20 à 25 °C. Avantageusement, une augmentation en température peut permettre d'accélérer la réaction de greffage. Selon une variante de l'invention, on réalise le greffage à une température comprise entre environ 65 et 70 °C.

A la fin de la réaction, on peut procéder à la vidange du circuit de circulation et si nécessaire on laisse refroidir l'ensemble du dispositif jusqu'à au moins une température de 30 à 40 °C. On procède ensuite à un rinçage de l'ensemble de manière à débarrasser la membrane de toute trace en organominéraux n'ayant pas réagi vis-à-vis de la membrane. De préférence, le solvant mis en oeuvre dans cette étape de rinçage est le même ou apparenté à celui mis en oeuvre dans les étapes précédentes.

Selon un mode privilégié de l'invention, on procède à l'issue de ce rinçage, à un équilibrage de la membrane avec de l'eau permutée puis à son séchage dans des conditions opératoires conventionnelles.

Selon une variante du procédé revendiqué, il est procédé à l'issue de l'étape de rinçage et avant le séchage de la membrane greffée à un traitement supplémentaire pour éliminer les fonctions organiques présentes sur les motifs organominéraux greffés.

Ce traitement peut notamment consister en une hydrolyse acide ou encore alcaline en milieu oxydant de ladite membrane. Par exemple, il peut s'agir d'une hydrolyse avec une solution sodique en présence d'hypochlorite. Toutefois, il est clair qu'il peut être envisagé d'autres traitements aussi efficaces que ce type d'hydrolyse pour éliminer les fonctions organiques présentes à la surface de ladite membrane.

On procède ensuite au rinçage de la membrane et à son séchage.

Cette variante du procédé revendiqué a pour avantage de conduire à une membrane inorganique ne possédant que des fonctions minérales en surface. Ceci possède un intérêt potentiel sur le plan réactivité.

En effet, il s'avère possible d'envisager une nouvelle opération de greffage à la surface de la membrane greffée. De nouvelles fonctions covalentes peuvent être établies entre ces fonctions minérales et celles d'un organominéral, de même nature ou non.

C'est ainsi que, selon une seconde variante du procédé revendiqué,- il est réalisé à la surface de la membrane inorganique greffée de motifs minéraux, obtenue comme explicité ci-dessus une nouvelle opération de greffage selon le protocole exposé ci-avant.

Dans ce cas particulier, on obtient une membrane inorganique multigreffée.

Des membranes multigreffées peuvent toutefois, être également obtenues en procédant à une nouvelle opération de greffage sur des membranes greffées de motifs organominéraux non hydrolysés.

Les spécificités des membranes à modifier et celles obtenues selon le procédé revendiqué sont en fait celles évoquées ci-dessus dans le cadre des membranes revendiquées selon l'invention.

Enfin, comme il ressort des exemples soumis ci-après, les membranes greffées selon l'invention et utilisées plus particulièrement en nanofiltration présentent des rétentions en solutés supérieures à celles des membranes d'origine, c'est-à-dire non greffées.

On observe une modification des sélectivités des membranes greffées à l'égard des protéines comparativement aux membranes de base.

De même, les fonctions greffées sur les membranes minérales permettent d'obtenir des rétentions en ions métalliques supérieures à celles des membranes de base.

Vraisemblablement, la couverture de surface affiche, au niveau des membranes revendiquées, une taille de pores plus réduite.

La présente invention vise également l'utilisation des membranes greffées revendiquées pour la filtration.

Il peut s'agir de microfiltration, ou, de préférence, d'ultrafiltration ou, de manière encore plus préférée, de nanofiltration.

Ces membranes greffées s'avèrent particulièrement intéressantes car efficaces pour le recyclage d'ions métalliques, la rétention de colorants comme par exemple la tropaeoline-O, dans le traitement des effluents de papeterie contaminés par des dérivés phénoliques, pour l'isolement de molécules organiques de type vitamines, peptides, acides aminés, composés actifs en pharmacie et/ou cosmétique et pour la séparation de molécules hydrophobes en milieu non aqueux.

La présente invention a également pour objet l'utilisation des membranes inorganiques de filtration revendiquées ou susceptibles d'être obtenues selon l'invention pour l'isolement ou la séparation de solutés présents dans une solution. Il peut s'agir notamment d'ions métalliques, de protéines ou de composés chimiques.

Les figures et exemples soumis ci-après sont présentés à titre illustratif et non limitatif de la présente invention.

LEGENDES DES FIGURES

Figure 1 : Comparaison de la rétention du lysozyme (pH = 7, Tampon : TEA 3,75 mM) par une membrane Carbosep® M1, M1 greffée Ti-PP et M1 greffée Ti.

Figure 2 : Comparaison de la rétention de la BSA (pH = 7, Tampon : TEA 3,75 mM) par une membrane Carbosep® M1, M1 greffée Ti-PP et M1 greffée Ti.

## MATERIELS ET METHODES

### A. Membranes (exemples 1 à 7)

La couche séparatrice membranaire, à la surface de laquelle vont être greffés de manière covalente des motifs organominéraux, est une couche membranaire de nanofiltration consistant en une couche de zircone obtenue par un procédé de type Sol-gel tel que décrit précédemment.

Elle est déposée sur des membranes d'ultrafiltration Kerasep®, qui sont tubulaires et constituées d'une succession de couches :

- un support (monolithe $Al_2O_3$-$TiO_2$, de rapport pondéral $TiO_2/(Al_2O_3 + TiO_2)$ égal à 25 %), ayant un diamètre de 20 mm, comportant 19 canaux et présentant une porosité d'environ 40 % et un diamètre moyen équivalent de pores de 5 µm ;
- une couche formée d'un empilement de couches de plus en plus sélectives constituées d'oxyde de titane et de zircone ; cette couche (couche membranaire de microfiltration) a pour objectif de diminuer progressivement le diamètre moyen équivalent de pores à 0,1 µm ;
- une couche membranaire d'ultrafiltration constituée de zircone ayant un seuil de coupure de 15 kD et un diamètre moyen équivalent de pores de 1 mm environ et son épaisseur est de 5 nm.

La couche membranaire de nanofiltration (dite aussi couche Sol-gel) a un diamètre moyen équivalent de pores de 1 nm environ et son épaisseur est d'environ 0,1 µm.

Les membranes inorganiques obtenues peuvent être dénommées dans la suite de l'exposé membranes Kerasep® Sol-gel.

**B. Les organominéraux utilisés**

Il s'agit de produits Ken-React (Kenrich Petrochemical, Bayonne, New Jersey) distribués en France par la société OMYA Distribution.

Le tableau I ci-après identifie les organominéraux utilisés dans les exemples ci-après.

TABLEAU I

| Nom commercial | Formule | Nomenclature | Appellation |
|---|---|---|---|
| KR 44® | 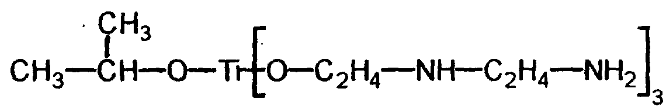 | isopropyl tri-(N-éthylènediamino) éthyl titanate | Ti-EDA |
| KR 138S® | 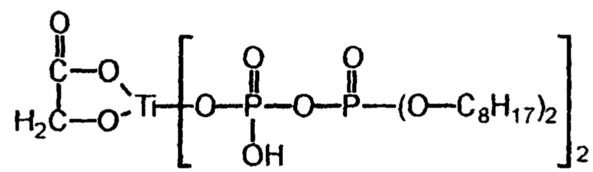 | di-(dioctyl) pyrophosphate oxoéthylène titanate | Ti-PPC8 |
| KR TTS® | 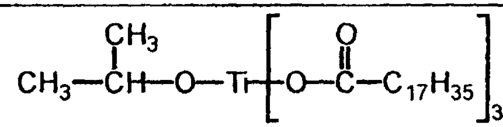 | isopropyl tri-(isostéaroyl) titanate | Ti-C17 |
| NZ 38® | 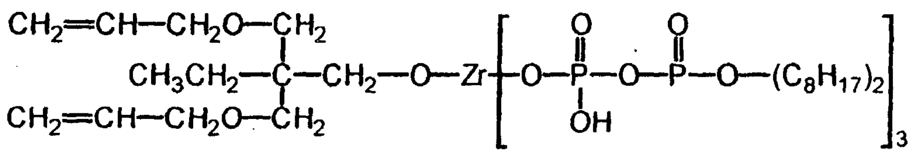 | neopentyl (diallyl) oxy, tri-(dioctyl) pyro-phosphato zirconate | Zr-PPC8 |

**C. Solutés testés**

- *Le saccharose :*

Le saccharose est un disaccharide neutre de masse molaire 342 g/mol. Son rayon est de 0,47 nm. On utilise une solution de saccharose à 0,1 mol/l dans l'eau déminéralisée.

- *La sérum albumine bovine (BSA) :*

C'est une protéine de masse moléculaire 66 000 g/mol, possédant un point isoélectrique de 4,8 et un rayon de 3,6 mm. La protéine mise en oeuvre correspond à la fraction V commercialisée par la société Fluka®.

- *Le lysozyme :*

Cette protéine possède une masse moléculaire de 14 400 g/mol, un point isoélectrique de 11 et un rayon de 1,8 mm.

**D. Méthodes d'analyse :**

- *La réfractométrie différentielle :*

Elle est utilisée pour doser le saccharose. Elle consiste à mesurer la déflexion optique d'un rayon lumineux due au changement d'indice de réfraction entre l'échantillon et la référence. Cette déflexion optique d'un rayon lumineux, mesurée par rapport à l'eau (solvant de la solution) est proportionnelle à la concentration de saccharose dans la solution à doser.

- *L'analyse du $Cu^{++}$* est réalisée en faisant circuler une solution d'EDTA (acide éthylène diamine tétracétique, $10^{-1}$ mol/L, pH 5) à travers une pompe HPLC à un débit de 2 ml/min à travers une canalisation de 2 ml environ. Les échantillons sont injectés par une vanne équipée d'une boude de 50 µl. On utilise une détection UV, fixée à 280 mm.
- *L'analyse du $Zn^{++}$* est réalisée par absorption atomique par dilution dans HCl (0,02 M).
- *L'analyse des protéines* est réalisée avec le système HPLC précédent en faisant circuler de l'eau distillée. On utilise une longueur d'onde de détection de 280 nm.

**<u>EXEMPLE 1</u>**

**Préparation de membrane greffées à l'aide de Ti-EDA.**

Les membranes à modifier par greffage sont des membranes telles que définies dans le chapitre précédent.
Les membranes utilisées sont référencées dans les tableaux suivants.
Le greffage peut être effectué sur chacune des membranes selon le protocole suivant :

On conditionne la membrane dans le solvant de greffage, l'isopropanol, en circuit fermé et sous pression (P ÷ 1 bar) jusqu'à obtenir 100 ml de perméat. On fait ensuite circuler 400 mi de la solution de greffage contenant 30 g/l de Ti-EDA en circuit fermé (perméat et rétentat recyclés) et sous pression (P ÷ 1 bar) pendant 3 h à 25 °C et 2 h à 70 °C.
On procède ensuite à une étape de rinçage pour éliminer l'excédent de Ti-EDA. Pour ce faire, le montage est vidangé et la membrane rincée en faisant circuler 200 ml d'isopropanol en circuit ouvert (perméat et rétentat non recyclés) puis 250 ml en circuit fermé et sous pression (P ÷ 1 bar) jusqu'à obtenir 80 ml de perméat. On procède à un rinçage de la même manière avec de l'eau déminéralisée. La membrane est enfin séchée à l'étuve à 60 °C pendant quelques heures.

**<u>EXEMPLE 2</u>**

**Influence du greffage sur la masse et la perméabilité à l'air des membranes greffées.**

Pour chaque membrane, on contrôle la masse et la perméabilité avant et après greffage.

a) La perméabilité à l'air

Elle est évaluée en mesurant la densité de flux d'air qui traverse la membrane, sous une pression de 2 bars.

b) Le contrôle de la masse

Il est effectué en pesant les membranes avant et après greffage. Ce contrôle de la masse permet de s'assurer que la couche Sol-gel n'a pas été détruite lors du greffage.

Les résultats obtenus sont répertoriés dans le tableau II suivant

TABLEAU II

| Membranes | Masse(g) initiale | Masse(g) après greffage | G. air ($m^3/s/m^2/bar$) initial | G. air ($m^3/s/m^2/bar$) après greffage | G. air ($m^3/s/m^2/bar$) après caractérisation et nettoyage |
|---|---|---|---|---|---|
| SG965A | 98,87 | 98,87 | 0,033 | 0,026 | 0,026 |
| SG965B | 96,33 | 96,33 | 0,026 | <0,020 | <0,020 |
| S15 | 96,60 | 96,60 | 0,025 | <0,020 | <0,020 |
| S16 | 96,07 | 96,07 | <0,020 | <0,020 | <0,020 |
| SR4 | 98,91 | 98,91 | 0,079 | 0,068 | 0,068 |
| S2B | 94,70 | 94,70 | 0,067 | 0,036 | 0,036 |

Pour toutes les membranes greffées la masse après greffage reste constante. Ce qui prouve que le greffage se fait au niveau moléculaire et que la couche Sol-gel n'a pas été détruite lors du greffage.

Pour les 6 membranes, la perméabilité à l'air diminue après greffage. Ce qui suppose que les greffons Ti-EDA comblent effectivement une partie des pores de la membrane.

De plus, la perméabilité à l'air mesurée après caractérisation et nettoyage des membranes est identique à celle mesurée après greffage.

Par conséquent, les membranes greffées ont un comportement tout à fait convenable. Elles ne sont pas détériorées après rétention d'un soluté et après nettoyage.

## EXEMPLE 3

**Rétention et perméabilité de membranes greffées à l'égard de solutés neutres.**

Afin d'évaluer l'effet du greffage sur la sélectivité des membranes, elles ont été caractérisées en utilisant le saccharose comme soluté modèle neutre.

Ces mesures sont effectuées aux conditions opératoires suivantes : une pression membranaire de 10 bar et une vitesse tangentielle de 2,65 m/s à une température de 25°C.

*- Rétention*

Les taux de rétention en saccharose sont déterminés en effectuant une filtration tangentielle pendant 1 heure en circuit fermé (perméat recyclé), afin de conserver une concentration en espèces constantes dans le rétentat.

Toutes les 15 minutes, on mesure le débit de perméat sous 10 bars et on en recueille quelques ml. Par ailleurs, on prélève également au bout de 15 et 60 minutes, une fraction de rétentat afin de s'assurer que la concentration en soluté $C_R$ est restée constante.

Ce taux de rétention dépend des propriétés intrinsèques de la membrane ainsi que des conditions opératoires telles que la température ou la pression.

*- Perméabilité à l'eau*

Elle est déterminée en effectuant une perméation avec de l'eau déminéralisée, sous 10 bars, en mesurant le débit de perméat toutes les 15 minutes pendant environ 1 heure, durée nécessaire à l'établissement d'un état stationnaire.

Les résultats sont présentés dans le tableau III ci-après.

Ce tableau rend également compte des résultats obtenus après traitement alcalin et oxydant des membranes greffées en vu d'éliminer de la surface de leur couche filtrante les fonctions organiques de Ti EDA.

Pour ce faire, on procède à une élimination de la partie organique des greffons par traitement de la membrane à 80 °C en milieu alcalin (NaOH 0,5 M - pH ÷ 14) en présence d'un agent oxydant (500 ppm d'hypochlorite de sodium).

Sont également présentés dans ce tableau les résultats obtenus avec une membrane témoin c'est-à-dire non greffée NF.

TABLEAU III

| Membranes | SG965A | S15 | S16 | SR4 | S2B | Témoin NF |
|---|---|---|---|---|---|---|
| Rétention saccharose (%) | sol-gel : 35<br>après greffage : 60 | 32<br>73 | 25<br>60 | 59<br>70 | 46<br>65 | 32 |
| Débit eau après greffage (1/h/$m^2$ sous 5 bar à 25 °C) | 81 | 70 | 73 | 197 | 165 | 122 |
| Débit eau final après traitement NaOH 0,5 M + *NaOCl* (1 h à 80 °C) | 82 | 69 | 75 | 190 | 170 | 122 |

Effet du greffage sur la rétention en saccharose :

Au niveau de la sélectivité, les membranes obtenues sont très satisfaisantes. En effet, on constate une amélioration des taux de rétention en saccharose pour toutes les membranes.

En particulier la rétention de membrane greffée (S15) augmente d'une façon significative de 32 à 73 % (comparativement à la membrane témoin). L'élimination de la partie organique des greffons par traitement alcalin + oxydant ne modifie pas ses caractéristiques.

## EXEMPLE 4

**Préparation de membranes greffées et modifiées chimiquement par traitement alcalin et oxydant.**

A partir de la membrane greffée SG965A avec l'organotitanate Ti EDA préparée en exemple 1, on procède à une élimination de la partie organique des greffons par traitement de la membrane à 80 °C en milieu alcalin (NaOH 0,5 M - pH ÷ 14) en présence d'un agent oxydant (500 ppm de hypochlorite de sodium).

Sur la membrane SG965A, 4 lavages ont été réalisés. Après chaque traitement, le débit eau de la membrane, et la rétention en saccharose sont quantifiés selon les protocoles décrits en exemple 3.

Les résultats figurent dans le tableau IV ci-après

TABLEAU IV

| | Débit eau (1/h/$m^2$ sous 5 bars à 25 °C) | Taux de rétention Saccharose (%) |
|---|---|---|
| Membrane Sol-Gel initiale | 100 | 35 |
| Après Greffage de KR44 (30 g/l) | 81 | 60 |
| Après traitement 1 : (0,5 M NaOH + 500 ppm NaClO, 1 h à 80 °C) | 107 | 69 |
| Après traitement 2 : (0,5 M NaOH + 500 ppm NaClO, 1 h à 80 °C) | 86 | 63 |
| Après traitement 3 : (0,5 M NaOH + 500 ppm NaClO, 1 h à 80 °C) | 86 | 63 |
| Après traitement 4 : (0, 5 M NaOH + 500 ppm NaClO, 1 h à 80 °C) | 82 | - |

On constate qu'au cours des traitements successifs pour l'élimination de la partie organique des greffons, le débit à l'eau reste pratiquement constant. De même, la rétention en saccharose évolue peu.

En conséquence, ces résultats confirment que la perméabilité à l'eau, ainsi que le taux de rétention en saccharose évoluent très peu lors des différents traitements successifs en milieu alcalin chloré (NaOH 0,5 M + 500 ppm eau de Javel).

Ce traitement alcalin et oxydant permet d'enlever la partie organique des greffons titanates.

Par ailleurs, une analyse élémentaire réalisée sur des poudres $ZrO_2$ fonctionnalisées par des greffons Ti-EDA a montré que la partie organique des greffons ne résistait pas à des lavages NaOH 0,1 M + NaOCl 2 ml/l.

Ce traitement permet d'obtenir une membrane entièrement minérale, avec du $TiO_2$ greffé sur la couche de filtration $ZrO_2$ de la membrane d'origine.

## EXEMPLE 5

**Effet de la nature de greffons minéraux sur la rétention et perméabilité à l'eau de membranes modifiées.**

Les membranes considérées sont greffées selon le protocole décrit en exemple 1 avec soit du Ti-PPC8 ou Zr-PPC8 en solution à 30 g/l. La partie organique $C_8$ du greffon est éliminée par la soude.

Le tableau V ci-après rend compte des résultats obtenus en termes de perméabilité et de taux de rétention à l'égard du saccharose.

TABLEAU V

| Membrane | Débit eau 5,25 (l/h/$m^2$) | Taux de rétention saccharose (%) |
|---|---|---|
| Sol-gel C11 | 113 | 18 |
| greffée Ti-PP | 107 | 59 |

TABLEAU V (suite)

| Membrane | Débit eau 5,25 (l/h/m2) | Taux de rétention saccharose (%) |
|---|---|---|
| Sol-gel 55 | 192 | 26 |
| greffée Zr-PP | 197 | 40 |

Le gain de rétention du saccharose est compris entre 14 et 48 %.

**EXEMPLE 6**

**Préparation d'une membrane multigreffée**

Selon cet essai, on procède à des greffages successifs au niveau de la couche de filtration d'une membrane inorganique.

Cet essai est réalisé sur la membrane S13 qui est greffée selon le protocole décrit en exemple 1.

Le premier greffage est réalisé en utilisant une solution à 30 g/l de Ti EDA dans de l'isopropanol.

Après avoir caractérisé la membrane avec le saccharose, celle-ci est nettoyée à la soude (0,5 M) pendant 1 heure à température ambiante.

On réalise ensuite un deuxième greffage en utilisant le même protocole qu'auparavant, avec une solution à 70 g/l.

Les résultats figurant dans le tableau VI ci-après rendent compte des taux de rétention manifestés à l'égard du saccharose à différents stades de préparation de la membrane multigreffée.

TABLEAU VI

| Kerasep® sol-gel S13 | Débit eau 5,25 (l/h/m2) | Taux de rétention Saccharose (%) |
|---|---|---|
| départ | 191 | 20 |
| greffage Ti-EDA (30 g/l) puis lavage NaOH 0,1 M, T. ambiante, 20 min | 170 | 66 |
| NaOH 0,5 M, T. ambiante | 186 | - |
| greffage Ti-EDA (70 gll) puis lavage NaOH 0,1 M, T. ambiante, 20 min | 175 | 65 |
| NaOH 0,5 M, T. ambiante | 170 | - |

On constate que le taux de rétention en saccharose et le débit demeurent stables, après le deuxième greffage par rapport au premier greffage.

**EXEMPLE 7 :**

**Rétention d'ions métalliques par une membrane greffée Ti-EDA.**

a) La rétention d'une solution de $Cu^{++}$ 10 mM par une membrane S13 greffée Ti-EDA (un ou deux greffages) est comparée à celle d'une membrane Sol-gel non greffée.

Les résultats obtenus figurent dans le tableau VII suivant :

Tableau VII :

| Membrane | Débit eau 5,25 (l/h/m2) | Taux de rétention $Cu^{++}$ (%) |
|---|---|---|
| Kerasep® sol-gel C10 | 146 | 55 |
| Kerasep® sol-gel S13 + greffage Ti-EDA (30 g/l) puis lavage NaOH 0,1 M, T. ambiante, 20 min | 171 | 83 |
| HCl 0,5 M, T. ambiante puis NaOH 0,1 M, T. ambiante, 20 min | - | - |

Tableau VII : (suite)

| Membrane | Débit eau 5,25 (l/h/m$^2$) | Taux de rétention $Cu^{++}$ (%) |
|---|---|---|
| Kerasep® sol-gel S13 + greffage Ti-EDA (70 g/l) puis lavage NaOH 0,1 M, T. ambiante, 20 min | 180 | 90 |
| HCl 0,5 M, T. ambiante puis NaOH 0,1 M, T. ambiante | 186 | - |

L'augmentation de la rétention du $Cu^{++}$ par la membrane Ti-EDA greffée d'une ou deux couches est due à la complexation des ions par les greffons. Dans ce cas, le deuxième greffage améliore significativement les performances de rétention spécifique du $Cu^{++}$ vraisemblablement en raison d'une meilleure capacité en greffons fixés sur le zircone.

Dans le cas particulier de la membrane Ti-EDA, il s'avère nécessaire de contrôler le pH durant l'essai, en raison de la libération de protons, résultant de la complexation du $Cu^{++}$.

b) De même, il a été apprécié la rétention d'une solution de $Zn^{++}$.

La membrane greffée est une membrane Sol-gel C11.

Elle est transformée selon le protocole décrit dans l'exemple 1 en utilisant comme solution de greffage une solution de 30 g/l de Ti-PPC8.

La membrane greffée par Ti-PPC8 est ensuite hydrolysée par une solution de NaOH (0,1 M) pendant deux heures à température ambiante.

Le débit en cours de filtration est respectivement de 156 $l.h^1.m^{-2}$ pour la membrane sol-gel C10 et de 119 $l.h^{-1}.m^{-2}$ pour la membrane C11 greffée Ti-PP (10 bar, 20°C). Le colmatage de la membrane greffée est plus fort que celui de la membrane non greffée en présence de $Zn^{++}$.

Le tableau VIII rend compte des valeurs de rétention en $Zn^{++}$ obtenues sur cette membrane comparativement à une membrane non greffée.

Tableau VIII

| Membrane | Débit eau 5,25 (l/h/m$^2$) | Taux de rétention $Zn^{++}$ (%) |
|---|---|---|
| Kerasep Sol-gel C10 | 124 | 38 |
| Kerasep Sol-gel C11 greffée Ti-PP | 107 | 47 |

On note que la rétention de $Zn^{++}$ augmente de 10 % si l'on utilise une membrane greffée Ti-PP. Ceci est vraisemblablement dû à la complexation des groupements pyrophosphates de la membrane greffée avec le $Zn^{++}$.

## EXEMPLE 8

**Rétention de protéines par des membranes greffées selon l'invention.**

On utilise à titre de soluté du lysozyme et de la sérum albumine bovine (BSA) en solution séparée à 1 g/L, pH 7, tampon triéthanolamine 3,75 mM. Ces solutions sont filtrées.

Les conditions opératoires sont les suivantes : pression appliquée 2 bar ; vitesse linéaire 4-4,2 m/s ; T = 12°C (BSA) et 20°C (lysozyme).

On additionne du KCl pour faire varier la force ionique. Quant aux rétentats et perméats, ils sont recyclés de manière à assurer une concentration constante.

La membrane utilisée est une membrane Carbosep M1. Il s'agit d'une membrane à base de $ZrO_2$ / $TiO_2$ fixée sur un support de carbone. Son seuil de coupure est de $150.10^3$ Daltons, la longueur de 600 mm et largeur de 6 mm.

La membrane est transformée selon le protocole décrit en exemple 1 par greffage de Ti-PPC8 ou de TiC17.

Les deux membranes greffées sont ensuite hydrolysées par une solution NaOH (0, 1 M) pendant deux heures à température ambiante.

Ces deux membranes obtenues, M1-Ti et M1-Ti-PP, ainsi que la membrane témoin non greffée M1, sont utilisées pour la filtration des solutions de lysozyme et de BSA. Leurs perméabilités hydrauliques Lp déterminées pour l'eau à une pression d'1 bar et une température de 20°C respectives sont de 73, 72 et 75 $l.h^{-1}.m^{-2}.bar^{-1}$.

Les comportements de chacune des membranes Carbosep M1, M1-Ti-PP et M1-Ti sont illustrés en figure 1 (pour le lysozyme) et figure 2 (pour la BSA).

Le taux de rétention observé y est exprimé en fonction de l'inverse de la racine carrée de la force ionique;

ceci permet de comprendre notamment si les effets de charge électrique sont les forces principales.

Pour le lysozyme, chargé positivement, des variations de rétention importantes sont observées à faible force ionique à cause des répulsions électriques.

Dans le cas de la BSA, les plus fortes variations de rétention sont obtenues à force ionique élevée.

## Revendications

1. Membrane inorganique de filtration comprenant un support en matériau inorganique revêtu d'au moins une couche séparatrice membranaire constituée de particules d'hydroxydes et/ou oxydes métalliques, **caractérisée en ce qu'**elle comprend à la surface de ladite couche séparatrice membranaire, une couche moléculaire comprenant des motifs organominéraux greffés à la surface de ladite couche séparatrice, lesdits motifs organominéraux répondant à la formule générale IV suivante :

$$(-)_pM[Z_1R_1]_n[Z_2R_2]_m \qquad \text{IV}$$

dans laquelle :

- M représente un atome de titane ou de zirconium,
- R représente un groupement

$$* \ (CH_3)_2CH-$$

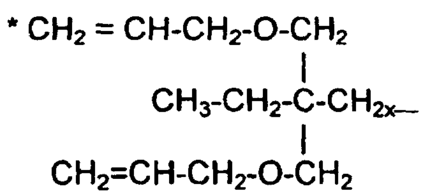

ou

$$* \ CH_3(OC_2H_4)_2—$$

- $R_1$ et $R_2$, identiques ou différents, représentent un radical organique non hydrolysable,
- X représente un groupement méthylène ou CO,
- m et n sont égaux à 0, 1, 2 ou 3 et p égal à 1 ou 2 à la condition que la somme de n, p et m soit égale à 4 et avec
  - lorsque p est égal à 1.
    $Z_1$ et $Z_2$, identiques ou différents, représentant
    -O-, -OC(O)-, -OC(O)O-, -OP(O)(O-)$_2$, -OP(O)(OH)P(O)(O-)$_2$, OP(O)(OH)P(O)(O-)$_3$, OP(O)(O-)$_3$, OS(O)$_2$- ou OS(O)$_2$(-)$_3$ et
  - lorsque p est égal à 2,
    $Z_1$ et $Z_2$ formant ensemble une chaîne divalente à structure cyclique tel qu'un cyclopyrophosphite.

2. Membrane inorganique selon la revendication 1 **caractérisée en ce que** les motifs organominéraux sont greffés à la surface de la couche séparatrice membranaire par des liaisons covalentes établies entre les fonctions minérales des motifs organominéraux et celles des hydroxydes et/ou oxydes métalliques de ladite couche séparatrice

membranaire.

3. Membrane inorganique de filtration selon la revendication 1 **caractérisée en ce que** ledit complexe organométallique est choisi parmi les organotitanates, les organozirconates et les organozircoaluminates.

4. Membrane inorganique de filtration selon la revendication 3 **caractérisée en ce que** le complexe organométallique est :

- un organotitanate ou organozirconate répondant à l'une des formules générales I ou II suivantes :

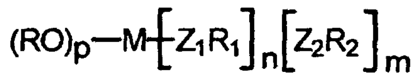

I

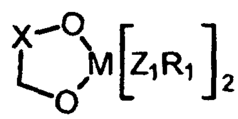

II

dans lesquelles :

- M représente un atome de titane ou de zirconium,
- R représente un groupement

* $(CH_3)_2CH$-

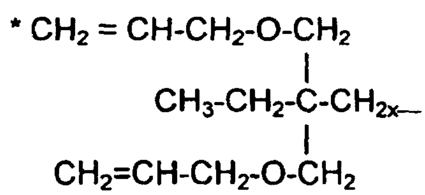

ou

* $CH_3(OC_2H_4)_2$-

- $R_1$ et $R_2$, identiques ou différents, représentent un radical organique non hydrolysable.
- X représente un groupement méthylène ou CO,
- m et n sont égaux à 0, 1, 2 ou 3 et p égal à 1 ou 2 à la condition que la somme de n, p et m soit égale à 4 et avec
    - lorsque p est égal à 1,
      $Z_1$ et $Z_2$, identiques ou différents, représentant
      -O-,-OC(O)-,-OC(O)O-,-OP(O)(O-)$_2$,-OP(O)(OH)P(O)(O-)$_2$, OP(O)(OH)P(O)(O-)$_3$, OP(O)(O-)$_3$, OS(O)$_2$- ou OS(O)$_2$(-)$_3$ et
    - lorsque p est égal à 2,
      $Z_1$ et $Z_2$ formant ensemble une chaîne divalente à structure cyclique tel qu'un

cyclopyrophosphite ;

ou est :

- un organozircoaluminate répondant à la formule générale III suivante :

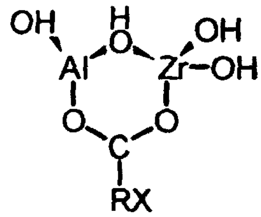

III

avec R représentant une chaîne hydrocarbonée $(CH_2)_2$, $(CH_2)_4$ ou $(CH_2)$ et X représentant un groupement $NH_2$, SH, OH, COOH ou

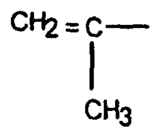

.

5. Membrane inorganique de filtration selon la revendication 1 ou 3 **caractérisée en ce que** le complexe organométallique est un organotitanate ou organozirconate choisi parmi :

- l'isopropyle tri-(N-éthylaminoéthylamino) titanate,
- le néoalkoxy tri(N-éthylaminoéthylamino) titanate,
- le néoalkoxy tri(néodécanoyl) titanate,
- l'isopropyle tri-(isostéaroyl) titanate,
- l'isopropyle tri-(dioctylphosphato) titanate,
- le tri néoalkoxy (dioctylphosphato)titanate,
- le tri néoalkoxy (néodécanoyl) zirconate,
- le tri néoalkoxy (dodécanoyl) benzène sulfonyle zirconate,
- le tri néoalkoxy (éthylène diaminoéthyl) zirconate et,
- le tri néoalkoxy (m-aminophényl) zirconate.

6. Membrane inorganique de filtration selon la revendication **1 caractérisée en ce que** les motifs organominéraux greffés sont des groupements choisis parmi les dérivés tri-(N-éthylaminoéthylamino) titanate, tri-(néodécanoyl) titanate, tri-(isostéaroyl) titanate, tri-(dioctylphosphato) titanate.

7. Membrane inorganique de filtration selon l'une des revendications 1 à **6 caractérisée en ce que** le taux de greffage varie entre environ 10 et 80 %.

8. Membrane inorganique de filtration l'une des revendications **1** à **7 caractérisée en ce qu'**elle présente différents motifs organominéraux greffés.

9. Membrane inorganique de filtration selon l'une des revendications précédentes **caractérisée en ce que** le support est composé de carbone, de verre, de carbures métalliques, d'un métal, d'oxydes métalliques ou de carbure de silicium.

10. Membrane inorganique de filtration selon la revendication **9 caractérisée en ce qu'**il s'agit d'un support monolithe céramique présentant un diamètre moyen équivalent de pores Ds compris entre 1 et 20 μm et une porosité supérieure à 30 %.

11. Membrane inorganique de filtration selon la revendication **10 caractérisée en ce que** le support est une céramique

de grains d'alumine $Al_2O_3$ enrobés au moins en partie par des grains d'oxyde de titane $TiO_2$.

**12.** Membrane inorganique de filtration selon !'une des revendications précédentes **caractérisée en ce que** la couche séparatrice membranaire est réalisée en oxyde de titane, en alumine et/ou en zircone.

**13.** Procédé utile pour préparer une membrane inorganique de filtration modifiée par greffage de motifs organominéraux telle que définie dans l'une des revendications **1 à 12 caractérisé en ce qu'**il comprend :

- le conditionnement de la couche séparatrice membranaire à modifier dans le solvant de la solution de greffage ;
- la circulation de la solution de greffage, comprenant au moins un organominéral à greffer, à travers la couche séparatrice membranaire conditionnée, dans des conditions opératoires appropriées à la réalisation dudit greffage ;
- le rinçage de ladite couche séparatrice membranaire greffée pour éliminer l'excès d'organominéraux n'ayant pas réagi ;
- le séchage de ladite membrane greffée.

**14.** Procédé selon la revendication **13 caractérisé en ce qu'**il comprend une étape supplémentaire de traitement des motifs organominéraux greffés pour éliminer leurs fonctions organiques avant l'étape de séchage.

**15.** Procédé selon l'une des revendications **13 ou 14 caractérisé en ce que** l'organominéral à greffer est un complexe organométallique hydrolysable comprenant au moins un atome de titane ou de zirconium.

**16.** Procédé selon l'une quelconque des revendications **13 à 15 caractérisé en ce que** l'organominéral à greffer est un organotitanate ou organozirconate tel que défini dans l'une des revendications 3 à 5.

**17.** Procédé selon l'une des revendications **13 à 16 caractérisé en ce que** le solvant de greffage est un solvant alcoolisé.

**18.** Procédé selon la revendication **17 caractérisé en que** le solvant de greffage est l'isopropanol.

**19.** Procédé selon l'une des revendications **13 à 18 caractérisé en ce que** la solution de greffage possède une concentration comprise entre environ 5 et 100g/l en au moins un organominéral.

**20.** Procédé selon la revendication **19 caractérisé en ce que** la concentration est comprise entre environ 20 et 70 g/l.

**21.** Procédé selon l'une des revendications **13 à 20 caractérisé en ce que** la membrane inorganique à modifier est telle que définie dans l'une des revendications **9 à 12.**

**22.** Procédé selon l'une des revendications **13 à 21 caractérisé en ce que** le conditionnement de la membrane à greffer est effectué en circuit fermé.

**23.** Procédé selon l'une des revendications **13 à 22 caractérisé en ce que** l'opération de greffage est effectuée en circuit fermé avec recyclage du perméat et du rétentat.

**24.** Procédé selon l'une des revendications **13 à 23 caractérisé en ce que** ladite membrane greffée, débarrassée par rinçage de l'excès en organominéraux et non séchée subit une hydrolyse acide ou alcaline en milieu oxydant pour éliminer les fonctions organiques présentes sur les motifs organominéraux greffés.

**25.** Procédé selon l'une des revendications **13 à 24 caractérisé en ce que** les membranes greffées de motifs minéraux, obtenues à l'issue dudit procédé, sont soumises à une nouvelle opération de greffage selon le protocole décrit dans l'une des revendications **13 à 23**.

**26.** Utilisation d'une membrane inorganique de filtration selon l'une des revendications **1 à 12** pour la nanofiltration, l'ultrafiltration ou la microfiltration.

**27.** Utilisation d'une membrane inorganique de filtration selon l'une des revendications **1 à 12** pour isoler et/ou séparer des solutés présents dans une solution.

**28.** Utilisation selon la revendication **27**, **caractérisée en ce que** les solutés sont des ions métalliques, des composés chimiques et/ou des protéines.

## Claims

**1.** Inorganic filtering membrane comprising an inorganic material support covered with at least one membrane separating layer constituted by metal oxide and/or hydroxide particles, **characterized in that** it comprises on the surface of said membrane separating layer a molecular layer comprising organomineral units grafted on the surface of said separating layer, said organomineral units complying with the following general formula IV:

$$(-)_pM[Z_1R_1]_n[Z_2R_2]_m \qquad \text{IV}$$

in which:

- M represents a titanium or zirconium atom,
- R represents a group

$$*(CH_3)_2CH-$$

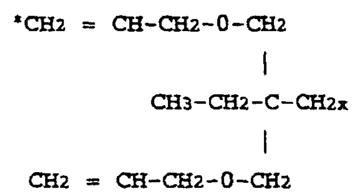

or

$$*CH_3(OC_2H_4)_2$$

- $R_1$ and $R_2$, which are the same or different, represent a non-hydrolyzable, organic radical,
- X represents CO or a methylene group,
- m and n are equal to 0, 1, 2 or 3 and p is equal to 1 or 2, provided that the sum of n, p and m is equal to 4 and with
  - when p is equal to 1,
    Z1 and Z2, which are the same or different, representing
    -O-, -OC(O)-, -OC(O)O-, $-OP(O)(O-)_2$, $-OP(O)(OH)P(O)(O-)_2$, $OP(O)(OH)P(O)(O-)_3$, $OP(O)(O-)_3$, $OS(O)_2$- or $OS(O)_2(-)_3$ and
  - when p is equal to 2,
    $Z_1$ and $Z_2$ together forming a divalent chain having a cyclic structure such as a cyclopyrophosphite.

**2.** Inorganic membrane according to claim 1, **characterized in that** the organomineral units are grafted on the surface of the membrane separating layer by covalent bonds established between the mineral functions of the organomineral units and those of the metal oxides and/or hydroxides of said membrane separating layer.

**3.** Inorganic filtering membrane according to claim 1, **characterized in that** said organometallic complex is chosen from among organotitanates, organozirconates and organozircoaluminates.

**4.** Inorganic filtering membrane according to claim 3, **characterized in that** the organometallic complex is:

- an organotitanate or organozirconate complying with one of the following general formulas I or II:

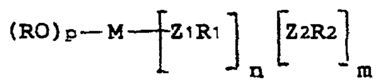

I

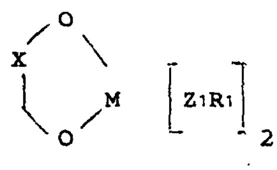

II

in which:

- M represents a titanium or zirconium atom,
- R represents a group

$$*(CH_3)_2CH-$$

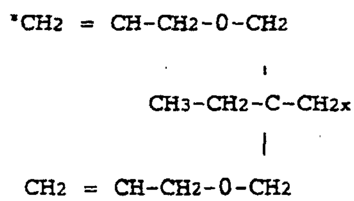

or

$$*CH_3(OC_2H_4)_2$$

- $R_1$ and $R_2$, which are the same or different, represent a non-hydrolyzable, organic radical,
- X represents CO or a methylene group,
- m and n are equal to 0, 1, 2 or 3 and p is equal to 1 or 2, provided that the sum of n, p and m is equal to 4 and with
  - when p is equal to 1,
    $Z_1$ and $Z_2$, which are the same or different, representing
    -O-,-OC(O)-,-OC(O)O-,-OP(O)(O-)$_2$,-OP(O)(OH)P(O)(O-)$_2$, OP(O)(OH)P(O)(O-)$_3$, OP(O)(O-)$_3$, OS(O)$_2$- or OS(O)$_2$(-)$_3$ and
  - when p is equal to 2,
    $Z_1$ and $Z_2$ together forming a divalent chain having a cyclic structure such as a cyclopyrophosphite;

or is:

- an organozircoaluminate complying with the following general formula III:

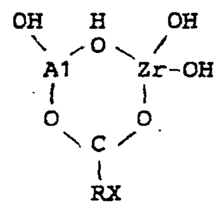

III

with R representing a hydrocarbon chain $(CH_2)_2$, $(CH_2)_4$ or $(CH_2)$ and X representing a group $NH_2$, SH, OH, COOH or

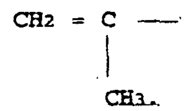

**5.** Inorganic filtering membrane according to claim 1 or 3, **characterized in that** the organometallic complex is an organotitanate or organozirconate chosen from among:

- isopropyl tri(N-ethylaminoethylamino) titanate,
- neoalkoxy tri(N-ethylaminoethylamino) titanate,
- neoalkoxy tri(neodecanoyl) titanate,
- isopropyl tri((isostearoyl) titanate,
- isopropyl tri-(dioctylphosphato) titanate,
- tri neoalkoxy (dioctylphosphato) titanate,
- tri neoalkoxy (neodecanoyl) zirconate,
- tri neoalkoxy (dodecanoyl) benzene sulphonyl zirconate,
- tri neoalkoxy (ethylene diaminoethyl) zirconate and
- tri neoalkoxy (m-aminophenyl) zirconate.

**6.** Inorganic filtering membrane according to claim 1, **characterized in that** the grafted organomineral units are groups chosen from among tri-(N-ethylaminoethylamino) titanate, tri-(neodecanoyl) titanate, tri-(isostearoyl) titanate and tri-(dioctylphosphato) titanate derivatives.

**7.** Inorganic filtering membrane according to one of the claims 1 to 6, **characterized in that** the grafting level varies between approximately 10 and 80%.

**8.** Inorganic filtering membrane according to one of the claims 1 to 7, **characterized in that** it has different grafted organomineral units.

**9.** Inorganic filtering membrane according to one of the preceding claims, **characterized in that** the support is made from carbon, glass, metal carbides, a metal, metal oxides or silicon carbide.

**10.** Inorganic filtering membrane according to claim 9, **characterized in that** it is a monolithic ceramic support having a mean equivalent pore diameter Ds between 1 and 20 μm and a porosity exceeding 30%.

**11.** Inorganic filtering membrane according to claim 10, **characterized in that** the support is an alumina, $Al_2O_3$, grain ceramic coated at least partly with titanium dioxide, $TiO_2$, grains.

**12.** Inorganic filtering membrane according to one of the preceding claims, **characterized in that** the membrane separating layer is made from titanium dioxide, alumina and/or zirconia.

**13.** Method suitable for the preparation of an inorganic filtering membrane modified by grafting organomineral units as defined in one of the claims 1 to 12, **characterized in that** it comprises

- the conditioning of the membrane separating layer to be modified in the solvent of the grafting solution,
- the circulation of the grafting solution, comprising at least one organomineral to be grafted, through the conditioned membrane separating layer, under operating conditions suitable for implementing said grafting,
- the rinsing of said grafted membrane separating layer in order to eliminate the organomineral excess which has not reacted,
- the drying of said grafted membrane.

**14.** Method according to claim 13, **characterized in that** it comprises a supplementary stage of treating the grafted organomineral units in order to eliminate their organic functions prior to the drying stage.

**15.** Method according to one of the claims 13 or 14, **characterized in that** the organomineral to be grafted is a hydrolyzable, organometallic complex comprising at least one titanium or zirconium atom.

**16.** Method according to any one of the claims 13 to 15, **characterized in that** the organomineral to be grafted is an organotitanate or organozirconate, as defined in one of the claims 3 to 5.

**17.** Method according to one of the claims 13 to 16, **characterized in that** the grafting solvent is an alcohol-containing solvent.

**18.** Method according to claim 17, **characterized in that** the grafting solvent is isopropanol.

**19.** Method according to one of the claims 13 to 18, **characterized in that** the grafting solution has a concentration between approximately 5 and 100 g/l of at least one organomineral.

**20.** Method according to claim 19, **characterized in that** the concentration is between approximately 20 and 70 g/l.

**21.** Method according to one of the claims 13 to 20, **characterized in that** the inorganic membrane to be modified is as defined in one of the claims 9 to 12.

**22.** Method according to one of the claims 13 to 21, **characterized in that** the conditioning of the membrane to be grafted takes place in closed circuit.

**23.** Method according to one of the claims 13 to 22, **characterized in that** the grafting operation is performed in closed circuit with recycling of the permeate and retentate.

**24.** Method according to one of the claims 13 to 23, **characterized in that** the grafted membrane from which the organomineral excess has been removed by rinsing and which has not been dried, undergoes acid or alkaline hydrolysis in an oxidizing medium in order to eliminate the organic functions present on the grafted organomineral units.

**25.** Method according to one of the claims 13 to 24, **characterized in that** the membranes grafted with mineral units obtained at the end of said method undergo a further grafting operation according to the procedure described in one of the claims 13 to 23.

**26.** Use of an inorganic filtering membrane according to one of the claims 1 to 12 for nanofiltration, ultrafiltration or microfiltration.

**27.** Use of an inorganic filtering membrane according to one of the claims 1 to 12 for isolating and/or separating solutes present in a solution.

**28.** Use according to claim 27, **characterized in that** the solutes are metal ions, chemical compounds and/or proteins.

### Patentansprüche

**1.** Anorganische Filtermembran, umfassend einen Träger aus einem anorganischen Material, der mit mindestens einer membranartigen Trennschicht bedeckt ist, die aus Hydroxid- und/oder Metalloxid-Partikeln besteht, **dadurch gekennzeichnet, dass** sie an der Oberfläche der membranartigen Trennschicht eine molekulare Schicht aufweist,

die organomineralische Einheiten aufweist, die auf die Oberfläche dieser Trennschicht gepfropft sind, wobei diese organomineralischen Einheiten der folgenden allgemeinen Formel IV entsprechen:

$$(-)_pM[Z_1R_1]_n[Z_2R_2]_m \qquad \text{IV}$$

in der:

- M ein Titan- oder Zirkonium darstellt,
- R eine Gruppe

* $(CH_3)_2CH-$

* 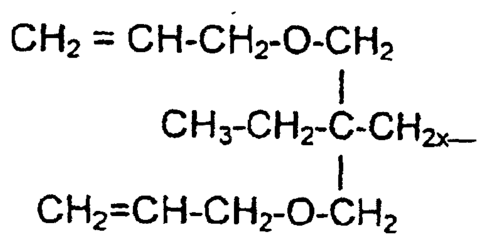

oder

* $CH_3(OC_2H_4)_2-$

darstellt,

- $R_1$ und $R_2$, die gleich oder unterschiedlich sein können, einen nicht hydrolysierbaren organischen Rest darstellen,
- X eine Methylen- oder CO-Gruppe darstellt,
- m und n gleich 0, 1, 2 oder 3 sind und p gleich 1 oder 2 ist, mit der zusätzlichen Bedingung, dass die Summe von n, p und m gleich 4 ist, wobei
  - · wenn p gleich 1 ist,
    $Z_1$ und $Z_2$, die gleich oder unterschiedlich sein können, -O-, -OC(O)-, -OC(O)O-, $-OP(O)(O-)_2$, $-OP(O)(OH)P(O)(O-)_2$, $OP(O)(OH)P(O)(O-)_3$, $OP(O)(O-)_3$, $OS(O)_2-$ oder $OS(O)_2(-)_3$ darstellen und
  - · wenn p gleich 2 ist,
  - · $Z_1$ und $Z_2$ zusammen eine zweiwertige Kette mit ringförmiger Struktur, wie ein Cyclopyrophosphit, bilden.

**2.** Anorganische Membran nach Anspruch 1, **dadurch gekennzeichnet, dass** die organomineralischen Einheiten auf die Oberfläche der membranartigen Trennschicht durch kovalente Bindungen gepfropft sind, die die mineralischen Gruppen der organomineralischen Einheiten mit denen der Hydroxide und/oder Metalloxide dieser membranartigen Trennschicht eingehen.

**3.** Anorganische Filtermembran nach Anspruch 1, **dadurch gekennzeichnet, dass** es sich bei dem organometallischen Komplex um ein Organotitanat, ein Organozirkonat oder ein Organozirkoaluminat handelt.

**4.** Anorganische Filtermembran nach Anspruch 3, **dadurch gekennzeichnet, dass** der organometallische Komplex folgendes ist:

- ein Organotitanat oder Organozirkonat, das einer der folgenden allgemeinen Formeln I oder II entspricht:

$$(RO)_p-M[Z_1R_1]_n[Z_2R_2]_m \quad I$$

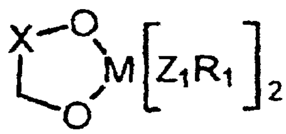 II

in denen:

- M ein Titan- oder Zirkoniumatom darstellt,
- R eine Gruppe

  * $(CH_3)_2CH-$

  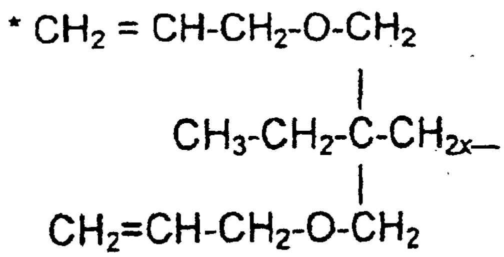

  oder

  * $CH_3(OC_2H_4)_2-$

  darstellt,

- $R_1$ und $R_2$, die gleich oder unterschiedlich sein können, einen nicht hydrolysierbaren organischen Rest darstellen,
- X eine Methylen- oder CO-Gruppe darstellt,
- m und n gleich 0, 1, 2 oder 3 sind und p gleich 1 oder 2 ist, mit der zusätzlichen Bedingung, dass die Summe von n, p und m gleich 4 ist, wobei
  - wenn p gleich 1 ist,
    $Z_1$ und $Z_2$, die gleich oder unterschiedlich sein können, -O-, -OC(O)-, -OC(O)O-, $-OP(O)(O-)_2$, $-OP(O)(OH)P(O)(O-)_2$, $OP(O)(OH)P(O)(O-)_3$, $OP(O)(O-)_3$, $OS(O)_2$- oder $OS(O)_2(-)_3$ darstellen und
  - wenn p gleich 2 ist,
    $Z_1$ und $Z_2$ zusammen eine zweiwertige Kette mit ringförmiger Struktur, wie ein Cyclopyrophosphit, bilden;

oder:

- ein Organozirkoaluminat, das der folgenden allgemeinen Formel III entspricht:

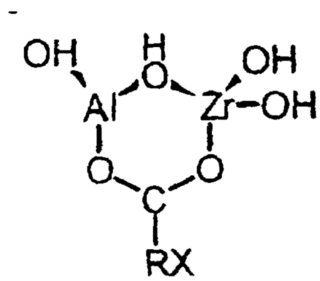

III

wobei R eine Kohlenwasserstoffkette $(CH_2)_2$, $(CH_2)_4$ oder (CH) darstellt und X eine Gruppe $NH_2$, SH, OH, COOH oder

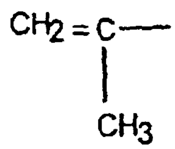

darstellt.

5. Anorganische Filtermembran nach Anspruch 1 oder 3, **dadurch gekennzeichnet, dass** der organometallische Komplex ein Organotitanat oder Organozirkohat ist, das ausgewählt ist aus:

- Isopropyl-tri-(N-ethylaminoethylamino)titanat,
- Neoalkoxy-tri(N-ethylaminoethylamino)titanat,
- Neoalkoxy-tri(neodecanoyl)titanat,
- Isopropyl-tri-(isostearoyl)titanat,
- Isopropyl-tri-(dioctylphosphato)titanat,
- Tri-neoalkoxy(dioctylphosphato)titanat,
- Tri-neoalkoxy(neodecanoyl)zirkonat,
- Tri-neoalkoxy(dodecanoyl)benzolsulfonylzirkonat,
- Tri-neoalkoxy(ethylendiaminoethyl)zirkonat und
- Tri-neoalkoxy(m-aminophenyl)zirkonat.

6. Anorganische Filtermembran nach Anspruch 1, **dadurch gekennzeichnet, dass** die aufgepfropften organomineralischen Einheiten Gruppen sind, die aus den Derivaten Tri-(N-ethylaminoethylamino)titanat, Tri-(neodekanoyl)titanat, Tri-(isostearoyl)titanat, Tri-(dioctylphosphato)titanat ausgewählt sind.

7. Anorganische Filtermembran nach einem der Ansprüche 1 bis 6, **dadurch gekennzeichnet, dass** der Pfropfgrad zwischen etwa 10 und 80 % variiert.

8. Anorganische Filtermembran nach einem der Ansprüche 1 bis 7, **dadurch gekennzeichnet, dass** sie verschiedene aufgepfropfte organomineralische Einheiten aufweist.

9. Anorganische Filtermembran nach einem der vorhergehenden Ansprüche, **dadurch gekennzeichnet, dass** der Träger aus Kohlenstoff, Glas, Metallcarbiden, einem Metall, Metalloxiden oder Siliciumcarbid besteht.

10. Anorganische Filtermembran nach Anspruch 9, **dadurch gekennzeichnet, dass** es sich um einen monolithischen keramischen Träger handelt, der einen mittleren Poren-Äquivalenzdurchmesser Ds zwischen 1 und 20 µm und eine Porosität von mehr als 30 % aufweist.

**11.** Anorganische Filtermembran nach Anspruch 10, **dadurch gekennzeichnet, dass** der Träger eine Keramik aus Körnern aus Aluminiumoxid $Al_2O_3$ ist, die mindestens zum Teil mit Körnern aus Titanoxid $TiO_2$ umhüllt sind.

**12.** Anorganische Filtermembran nach einem der vorhergehenden Ansprüche, **dadurch gekennzeichnet, dass** die membranartige Trennschicht aus Titanoxid, aus Aluminiumoxid und/oder aus Zirkon hergestellt ist.

**13.** Verfahren zur Herstellung einer durch Aufpfropfen von organomineralischen Einheiten modifizierten anorganischen Filtermembran nach einem der Ansprüche 1 bis 12, **dadurch gekennzeichnet, dass** es umfasst:

- Konditionieren der zu modifizierenden membranartigen Trennschicht in dem Lösungsmittel der Pfropflösung;
- Umlaufen der Pfropflösung, die mindestens ein aufzupfropfendes Organomineral enthält, durch die konditionierte membranartige Trennschicht bei Arbeitsbedingungen, die für die Durchführung der Pfropfung geeignet sind;
- Spülen der bepfropften membranartigen Trennschicht, um den Überschuß an Organomineralen, die nicht reagiert haben, zu entfernen;
- Trocknen der bepfropften Membran.

**14.** Verfahren nach Anspruch 13, **dadurch gekennzeichnet, dass** sie einen zusätzlichen Schritt der Behandlung der aufgepfropften organomineralischen Einheiten umfasst, um ihre organischen Gruppen vor dem Trocknungsschritt zu entfernen.

**15.** Verfahren nach einem der Ansprüche 13 oder 14, **dadurch gekennzeichnet, dass** das aufzupfropfende Organomineral ein hydrolysierbarer organometallischer Komplex ist, der mindestens ein Titan- oder Zirkonium aufweist.

**16.** Verfahren nach einem der Ansprüche 13 bis 15, **dadurch gekennzeichnet, dass** das aufzupfropfende Organomineral ein Organotitanat oder Organozirconat ist, wie es in einem der Ansprüche 3 bis 5 definiert wird.

**17.** Verfahren nach einem der Ansprüche 13 bis 16, **dadurch gekennzeichnet, dass** das Propflösungsmittel ein alkoholisches Lösungsmittel ist.

**18.** Verfahren nach Anspruch 17, **dadurch gekennzeichnet, dass** das Propflösungsmittel Isopropanol ist.

**19.** Verfahren nach einem der Ansprüche 13 bis 18, **dadurch gekennzeichnet, dass** die Pfropflösung eine Konzentration an mindestens einem Organomineral zwischen etwa 5 und 100 g/l aufweist.

**20.** Verfahren nach Anspruch 19, **dadurch gekennzeichnet, dass** die Konzentration zwischen etwa 20 und 70 g/l beträgt.

**21.** Verfahren nach einem der Ansprüche 13 bis 20, **dadurch gekennzeichnet, dass** die zu modifizierende anorganische Membran so beschaffen ist, wie in einem der Ansprüche 9 bis 12 definiert wird.

**22.** Verfahren nach einem der Ansprüche 13 bis 21, **dadurch gekennzeichnet, dass** die Konditionierung der zu bepfropfenden Membran in einem geschlossenen Kreislauf stattfindet.

**23.** Verfahren nach einem der Ansprüche 13 bis 22, **dadurch gekennzeichnet, dass** der Pfropfvorgang in einem geschlossenen Kreislauf mit Rezyklierung des Permeats und des Retentats stattfindet.

**24.** Verfahren nach einem der Ansprüche 13 bis 23, **dadurch gekennzeichnet, dass** die bepfropfte Membran, durch Spülen von dem Überschuß an Organomineralen befreit und nicht getrocknet, einer sauren oder alkalischen Hydrolyse in einem oxidierenden Milieu unterzogen wird, um die auf den aufgepfropften organomineralischen Einheiten vorhandenen organischen Gruppen zu entfernen.

**25.** Verfahren nach einem der Ansprüche 13 bis 24, **dadurch gekennzeichnet, dass** die mit mineralischen Einheiten bepfropften Membranen, die mit Hilfe dieses Verfahrens erhalten wurden, einem neuerlichen Pfropfvorgang gemäß dem in einem der Ansprüche 13 bis 23 beschriebenen Protokoll unterzogen werden.

**26.** Verwendung einer anorganischen Filtermembran nach einem der Ansprüche 1 bis 12 für die Nanofiltration, Ultrafiltration oder Mikrofiltration.

**27.** Verwendung einer anorganischen Filtermembran nach einem der Ansprüche 1 bis 12 für die Isolierung und/oder Abtrennung von in einer Lösung vorliegenden gelösten Stoffen.

**28.** Verwendung nach Anspruch 27, **dadurch gekennzeichnet, dass** die gelösten Stoffe Metallionen, chemische Verbindungen und/oder Proteine sind.

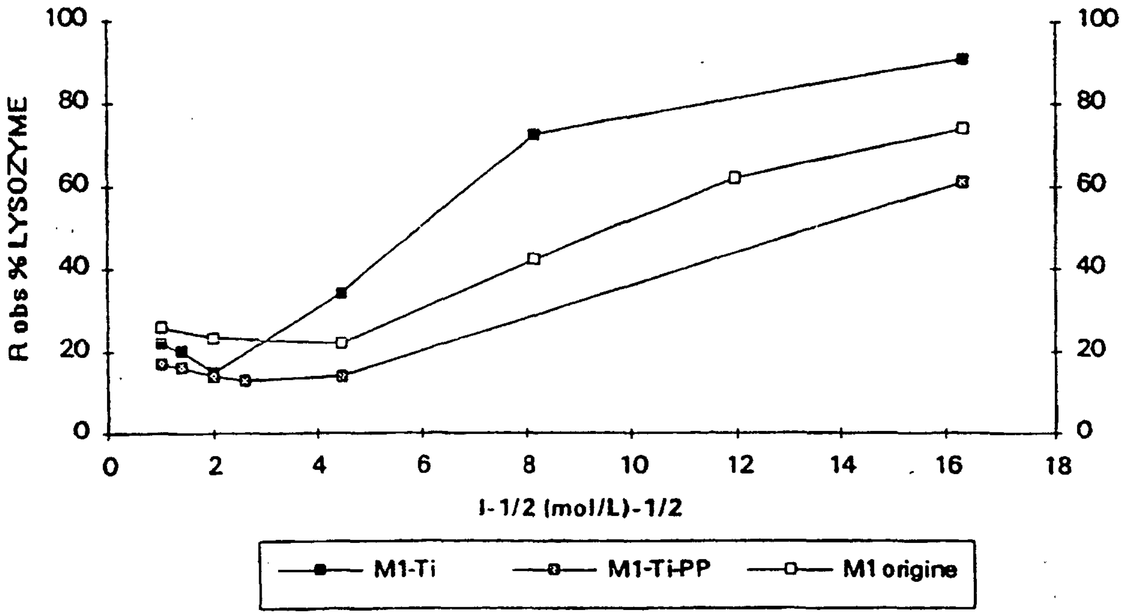
100
80
60
40
20
0
R obs % LYSOZYME
0 2 4 6 8 10 12 14 16 18
I-1/2 (mol/L)-1/2
M1-Ti
M1-Ti-PP
M1 origine

FIG.1

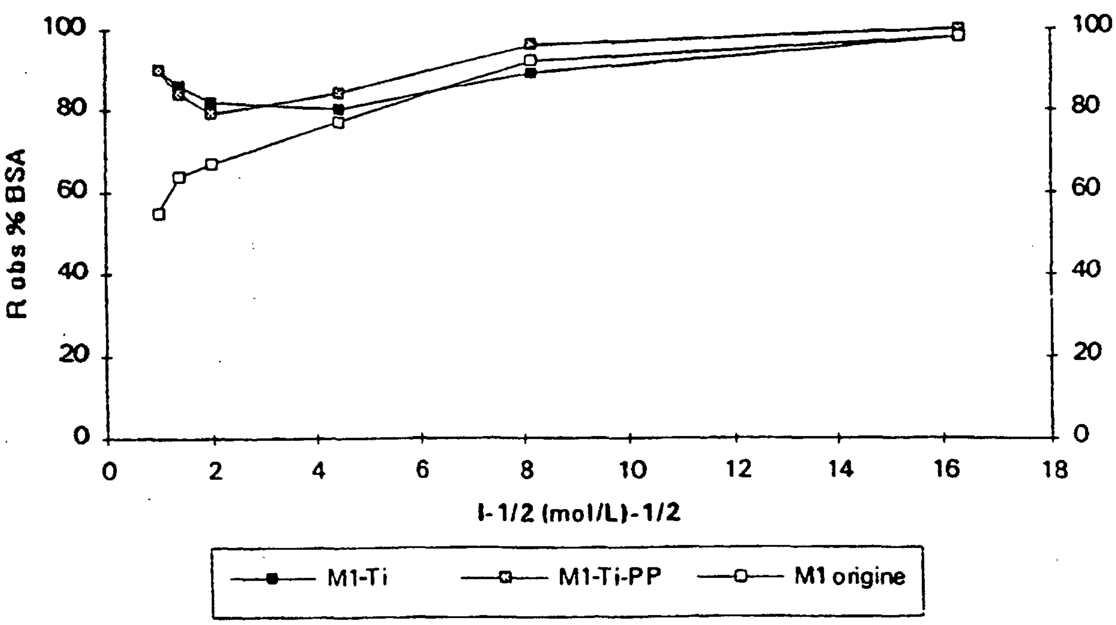
100
80
60
40
20
0
R obs % BSA
0 2 4 6 8 10 12 14 16 18
I-1/2 (mol/L)-1/2
M1-Ti
M1-Ti-PP
M1 origine

FIG.2